Europäisches Patentamt

European Patent Office

Office européen des brevets

(19)

(11) Numéro de publication : **0 336 844 B1**

# (12) FASCICULE DE BREVET EUROPEEN

(45) Date de publication du fascicule du brevet :
**22.05.91 Bulletin 91/21**

(51) Int. Cl.⁵ : **B60N 2/00**

(21) Numéro de dépôt : **89400941.4**

(22) Date de dépôt : **05.04.89**

(54) Elément structurel de véhicule de transport en commun.

(30) Priorité : **06.04.88 FR 8804541**

(43) Date de publication de la demande :
**11.10.89 Bulletin 89/41**

(45) Mention de la délivrance du brevet :
**22.05.91 Bulletin 91/21**

(84) Etats contractants désignés :
**BE DE GB IT NL SE**

(56) Documents cités :
**EP-A- 0 222 632**
**DD-A- 246 086**
**DE-A- 2 615 380**

(73) Titulaire : **Etablissements Georges Klein**
**36, rue Boussingault**
**F-75013 Paris (FR)**

(72) Inventeur : **Ulmann, Jean-Pierre**
**36, Rue Boussingault**
**F-75013 Paris (FR)**

(74) Mandataire : **Behaghel, Pierre et al**
**CABINET PLASSERAUD 84 rue d'Amsterdam**
**F-75009 Paris (FR)**

## Description

La présente invention concerne les éléments structurels de véhicules de transport en commun comportant un siège pour usager.

Elle trouve une application particulièrement importante, bien que non exclusive, dans le domaine des éléments structurels de wagons de chemin de fer du type de ceux utilisés dans les transports métropolitains.

Les sièges des véhicules de transport en commun du type wagons de métropolitain sont généralement fixés sur le sol par des pieds. Cette solution présente l'inconvénient que le nettoyage du sol nécessite de passer autour desdits pieds et empêche l'utilisation de robots de nettoyage.

Pour écarter cet inconvénient, il a déjà été proposé de fixer les sièges des véhicules de transport en commun en porte-à-faux sur les parois de ces véhicules en formant au moins en partie la structure d'un tel véhicule par des éléments structurels monoblocs présentant la forme générale d'un C dont la branche horizontale inférieure, le tronçon vertical intermédiaire et la branche horizontale supérieure constituent respectivement un tronçon de plancher du véhicule, un tronçon de paroi de ce véhicule et un support de siège.

Dans les modes de réalisation connus de ces éléments structurels (brevet EP-A-222 632), la branche horizontale supérieure présente la forme d'une plaque horizontale et, pour éviter la flexion de cette plaque vers le bas sous le poids des personnes assises, en particulier lorsque le siège supporté par ladite plaque est une banquette propre à recevoir plusieurs personnes assises côte à côte, il convient de prévoir sous ladite plaque une jambe de force, ce qui réduit l'étendue de l'espace inférieur accessible par les robots de nettoyage.

L'invention a pour but, surtout, de supprimer cet inconvénient.

A cet effet, les éléments structurels du genre ci-dessus sont essentiellement caractérisés selon l'invention en ce que leur branche horizontale supérieure est constituée par une poutre en L d'arête horizontale comprenant une aile horizontale formant assise de siège et une aile verticale prolongeant vers le haut l'aile horizontale et formant dossier dudit siège.

La présence de cette aile verticale formant dossier dans l'élément structurel monobloc considéré renforce considérablement par "triangulation" la résistance à la flexion de la branche horizontale supérieure dudit élément, ce qui rend inutile ou tout au moins secondaire le recours à des jambes de force inférieures.

Dans des modes de réalisation préférés, on a recours en outre à l'une et/ou l'autre des dispositions suivantes :

– la poutre forme une double assise symétrique par rapport au dossier et présente un profil sensiblement en forme de T renversé,

– la surface supérieure de la branche horizontale inférieure de l'élément structurel est en pente descendante à partir de la branche verticale, cette disposition permettant aux eaux usées de nettoyage de descendre vers l'extérieur de l'élément où elles peuvent être collectées plus aisément,

– l'élément structurel comprend une coque stratifiée,

– la coque est constituée en matériau composite à base d'un matériau thermodurcissable armé par des fibres ou fils,

– le matériau thermodurcissable est une résine époxy et les fibres ou fils sont des fibres ou fils de verre,

– la coque est remplie d'une mousse de polymère.

L'invention sera mieux comprise à la lecture de la description qui suit d'un mode particulier de réalisation donné à titre d'exemple non limitatif.

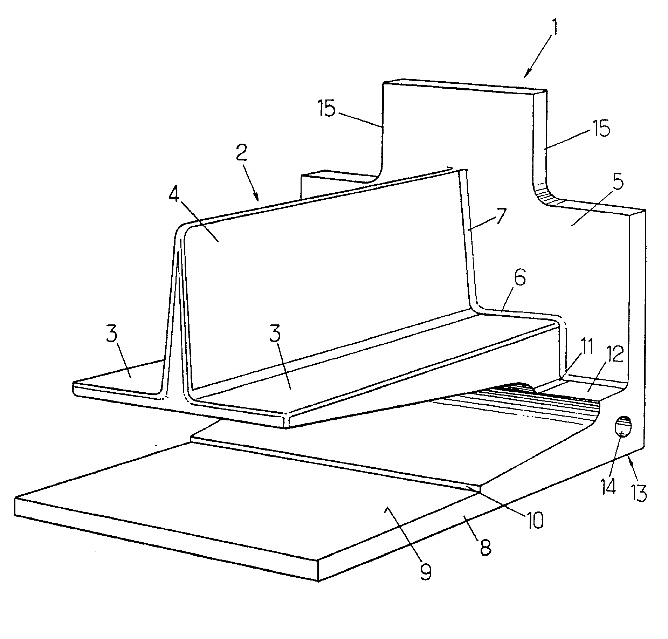

La description se réfère au dessin unique qui l'accompagne et qui montre schématiquement, en perspective, un élément structurel de véhicule établi selon l'invention.

L'élément structurel 1 comporte un siège 2 composé d'une assise 3 et d'un dossier 4. Il présente sensiblement la forme générale d'une cornière comportant une branche verticale 5 sur laquelle l'assise et le dossier sont fixés en 6 et 7 rigidement en porte-à-faux et une branche horizontale 8 s'étendant sous le siège 2. L'assise 3 est double, symétrique par rapport au dossier 4, le siège présentant un profil sensiblement en forme de T renversé. La largeur de l'assise est prévue pour permettre à deux usagers de s'asseoir côte-à-côte. Des moyens de rembourrage (non représentés) peuvent être avantageusement ajoutés.

Le branche horizontale 8 présente une surface supérieure 9 en pente légèrement descendante par rapport à un plan horizontal à partir de la zone coudée de la cornière. Cette surface présente par exemple un palier ou marche 10, sans que cela ne soit en rien limitatif. Dans le mode de réalisation avantageux de la figure, l'assise est fixée et repose également partiellement en 11 sur une seconde marche marginale 12 de la branche horizontale 8. Cette disposition permet une meilleure reprise du poids des usagers sur le siège en porte-à-faux.

La zone coudée 13 de la cornière est épaissie et évidée par un passage 14 pour le cheminement de câbles ou canalisations (non représentés). La branche verticale 5 comporte quant à elle, par exemple des parties évidées 15 coïncidant avec les ouvertures ou fenêtres du véhicule auquel l'élément structurel est destiné. La fixation de cet élément est réalisée par tout moyen connu en soi, par exemple sur un plancher préconstitué du véhicule ou sur des traverses de structure du véhicule.

L'élément structurel 1 de l'invention est avantageusement réalisé en matériau composite avec une structure de type sandwich, l'âme étant en mousse de polymère et la coque en matériau stratifié.

Les types de mousse de polymère utilisables sont par exemple des mousses au polyuréthane ou en PVC. La coque en matériau stratifié est réalisée avantageusement en matériau thermodurcissable du type résine époxy, les fibres ou fils de renforcement étant des fibres ou fils de verre.

Différents procédés de fabrication sont envisageables et peuvent se résumer essentiellement aux deux procédés suivants : réalisation de la pièce par moulage permettant de constituer une coque en matériau stratifié que l'on remplit ensuite de mousse de polymère par injection, ou réalisation d'une âme en mousse que l'on recouvre ensuite d'un matériau stratifié.

Dans le cas d'une réalisation par moulage, plusieurs types de moulage sont possibles :
- le moulage par projection simultanée, mais séparément, de la résine polyester et des fibres de verre sur un moule,
- le moulage par projection en "prémix", c'est-à-dire après prémélangeage des fibres de verre avec la résine, sur un moule,
- le moulage au contact par imprégnation d'un tissu de fibres de verre avec de la résine par pinceau, taloche ou rouleau, ou encore à l'aide d'une presse.

Grâce à ces méthodes de fabrication, un coût faible unitaire de l'élément peut être obtenu.

On décrit ci-après le mode préféré d'utilisation des éléments structurels de l'invention.

Ces éléments sont placés deux à deux, en vis-à-vis, pour constituer des ensembles de deux éléments accolés, fixés les uns aux autres et présentent une section droite sensiblement en forme de U.

Les branches horizontales reposent et sont fixées sur un plancher ou une structure transversale inférieure de véhicule de transport en commun et sont avantageusement recouvertes d'un revêtement étanche et peu sensible à l'usure par frottement. Les branches verticales sont fixées sur les parois latérales du véhicule. Elles peuvent aussi constituer les parois dudit véhicule.

Le dimension transversale de la branche horizontale d'un élément est plus grande que la largeur de l'assise dudit élément. Un passage central ou couloir existe donc entre les deux sièges respectifs des deux éléments accolés en vis-à-vis ce qui permet l'accès aux sièges par les usagers.

L'absence de pied ou d'obstacle sur le sol même (puisque les sièges sont en porte-à-faux) rend facilement accessibles toutes les parties du sol à un robot de nettoyage empruntant le passage central et muni de bras de nettoyage propres à s'étendre sous les sièges. Un nettoyage rapide et efficace du sol du véhicule est donc possible.

Comme il va de soi et comme il résulte d'ailleurs de ce qui précède, la présente invention ne se limite nullement aux modes de réalisation plus particulièrement envisagés ; elle en embrasse au contraire toutes les variantes, notamment celles où la pente de la surface supérieure de la branche horizontale de l'élément structurel descend vers la branche verticale, des trous d'évacuation d'eaux usées étant par exemple ménagés dans la zone coudée de la cornière, permettant ainsi une évacuation des eaux usées sur les côtés du véhicule.

**Revendications**

1. Elément structurel monobloc (1) de véhicule de transport en commun présentant la forme générale d'un C dont la branche horizontale inférieure (8), le tronçon vertical intermédiaire (5) et la branche horizontale supérieure (2) constituent respectivement un tronçon de plancher du véhicule, un tronçon de paroi de ce véhicule et un support de siège, caractérisé en ce que sa branche horizontale supérieure (2) est constituée par une poutre en L d'arête horizontale comprenant une aile horizontale (3) formant assise de siège et une aile verticale (4) prolongeant vers le haut l'aile horizontale et formant dossier dudit siège.

2. Elément structurel selon la revendication 1, caractérisé en ce que la poutre (2) comporte une double assise (3) symétrique par rapport au dossier (4) et présente un profil sensiblement en forme de T renversé.

3. Elément structurel selon l'une quelconque des revendications précédentes, caractérisé en ce que la surface supérieure (9) de la branche horizontale inférieure (8) est en pente descendante à partir du tronçon vertical (5).

4. Elément structurel selon l'une quelconque des revendications précédentes, caractérisé en ce qu'il comprend une coque stratifiée.

5. Elément structurel selon la revendication 4, caractérisé en ce que la coque est constituée en matériau composite à base d'un matériau thermodurcissable armé par des fibres ou fils.

6. Elément structurel selon la revendication 5, caractérisé en ce que le matériau thermodurcissable est une résine époxy et en ce que les fibres ou fils sont des fibres ou fils de verre.

7. Elément structurel selon l'une quelconque des revendications 4 à 6, caractérisé en ce que la coque est remplie d'une mousse de polymère.

## Ansprüche

1. Aufbauelement für ein öffentliches Verkehrsmittel, das aus einem Block (1) besteht und die allgemeine Form eines C hat, dessen unterer waagerechter Arm (8) einen Teil des Fahrzeugbodens bildet, während der senkrechte Zwischenarm (5) einen Teil der Fahrzeugwand und der obere waagerechte Arm eine Abstützung für einen Sitz bildet, dadurch gekennzeichnet, daß der obere waagerechte Arm (2) aus einem L-Träger mit horizontal verlaufender Kante besteht, der einen waagerechten Schenkel (3), der die Sitzfläche des Sitzes bildet und einen senkrechten Schenkel (4) enthält, der den waagerechten Schenkel nach oben verlängert und die Rückenlehne des Sitzes bildet.

2. Aufbauelement nach Anspruch 1, dadurch gekennzeichnet, daß der Träger (2) eine symmetrisch zur Rückenlehne (4) ausgebildete doppelte Sitzfläche (3) bildet und ein Profil aufweist, das im wesentlichen die Form eines umgekehrten T hat.

3. Aufbauelement nach einem der vorhergehenden Ansprüche, dadurch gekennzeichnet, daß die obenliegende Oberfläche (9) des unteren waagerechten Armes (8) ausgehend von dem senkrechten Arm (5) nach unten geneigt verläuft.

4. Aufbauelement nach einem der vorhergehenden Ansprüche, dadurch gekennzeichnet, daß es aus einer Schale aus einem Schichtstoff besteht.

5. Aufbauelement nach Anspruch 4, dadurch gekennzeichnet, daß die Schale aus einem Verbundwerkstoff auf der Basis eines in der Wärme aushärtbaren Stoffes besteht, der durch Fasern oder Fäden verstärkt ist.

6. Aufbauelement nach Anspruch 5, dadurch gekennzeichnet, daß der in der Wärme aushärtbare Stoff ein Epoxyharz ist und daß die Fasern oder Fäden Glasfasern oder -fäden sind.

7. Aufbauelement nach einem der vorhergehenden Ansprüche 4 bis 6, dadurch gekennzeichnet, daß die Schale mit einem polymerem Schaumkunststoff gefüllt ist.

## Claims

1. A generally C-shaped monobloc structural element (1) of a public transport vehicle, the lower horizontal branch (8), the intermediate vertical section (5) and the upper horizontal branch (2) of which constitute respectively a floor section of the vehicle, a wall section of this vehicle and a seating unit support, characterized in that its upper horizontal branch (2) consists of an L-shaped beam with a horizontal edge comprising a horizontal wing (3) forming the seat of the seating unit and a vertical wing (4) extending the horizontal wing upwards and forming the back of said seating unit.

2. A structural element according to claim 1, characterized in that the beam (2) comprises a double seat (3) symmetrical with respect to the back (4) and has a shape substantially in the form of an inverted T.

3. A structural element according to either one of the preceding claims, characterized in that the upper surface (9) of the lower horizontal branch (8) slopes downwards from the vertical section (5)

4. A structural element according to any one of the preceding claims, characterized in that it comprises a laminated body.

5. A structural element according to claim 4, characterized in that the body consists of composite material based on a thermosetting material reinforced by fibres or threads.

6. A structural element according to claim 5, characterized in that the thermosetting material is an epoxy resin and in that the fibres or threads are glass fibres or threads.

7. A structural element according to any one of claims 4 to 6, characterized in that the body is filled with a polymer foam.